Europäisches Patentamt

European Patent Office

Office européen des brevets

(11) Veröffentlichungsnummer: **0 387 902**
**A2**

(12) **EUROPÄISCHE PATENTANMELDUNG**

(21) Anmeldenummer: 90105031.0

(22) Anmeldetag: 16.03.90

(51) Int. Cl.5: **B27M 3/00, B32B 21/13,**
**E04F 15/04**

(30) Priorität: 17.03.89 DE 3908851

(43) Veröffentlichungstag der Anmeldung:
**19.09.90 Patentblatt 90/38**

(84) Benannte Vertragsstaaten:
**AT BE CH DE FR GB IT LI LU NL SE**

(71) Anmelder: **Schacht, Peter**
**Miesenbacher Strasse 69**
**D-8222 Ruhpolding(DE)**

(72) Erfinder: **Schacht, Peter**
**Miesenbacher Strasse 69**
**D-8222 Ruhpolding(DE)**

(74) Vertreter: **Dipl.-Ing. Schwabe, Dr. Dr.**
**Sandmair, Dr. Marx**
**Stuntzstrasse 16**
**D-8000 München 80(DE)**

(54) **Verfahren zur Herstellung von mehrlagigen Paneelbrettern bevorzugt für Fussböden.**

(57) Mehrlagige Fußbodenpaneelbretter werden von einer aus einzelnen, verleimten Lagen zusammengesetzten Platte abgeschnitten.

Erfindungsgemäß werden nun die Lagen zweier solcher Platten Unterseite an Unterseite zusammengelegt und miteinander verleimt, dann werden Doppelbrettrohlinge in Größe der herzustellenden Paneelbretter von der so gebildeten Verbundplatte abgeschnitten, und nach Erhärten des Leims werden diese Doppelbrettrohlinge längs ihrer Mittelebene halbiert, so daß zwei völlig verzugsfreie Paneelbretter gebildet werden.

Die an die Mittelebene der Verbundplatte angrenzenden Lagen bilden bevorzugt eine durchgehende Mittellage. Diese kann beidseitig mit bis zur Mittelebene reichenden Einschnitten versehen werden, so daß nach der Halbierung der Doppelbrettrohlinge jedes Paneelbrett eine unterste Lage aufweist, die durchgehende Trennschnitte aufweist.

Die an den Kanten der Paneelbretter ggf. erforderlichen Nuten und Federn werden bereits in die Kanten der Doppelbrettrohlinge in einem Arbeitsgang für jeweils zwei Paneelbretter eingebracht.

Fig. 1c

## Verfahren zur Herstellung von mehrlagigen Paneelbrettern bevorzugt für Fußböden

Die Erfindung betrifft ein Verfahren zur Herstellung von Sperrholz-Paneelbrettern bevorzugt für Fußböden, gemäß dem Oberbegriff der Ansprüche 1 und 4.

Paneelbretter für Fußböden werden abgesperrte Bretter ausgebildet, um allzu groben Verwerfungen durch Feuchtigkeits- und Wärmeeinflüsse nach dem Verlegen vorzubeugen.

Hierbei weisen die bekannten, im Oberbegriff des Anspruchs 1 bezeichneten Paneelbretter neben der die eigentliche Trittfläche bildenden Trittlage eine mit dieser verleimte Sperrlage auf, die aus Holzbrettern oder -stäben gebildet ist und deren Faserverlauf sich jeweils quer zu jenem der Trittlage erstreckt.

Um das sogenannte "Schüsseln" solcher Paneelbretter zu vermeiden, ist die Sperrlage in Längsrichtung ihres Faserverlaufes durch quer zur Trittfläche verlaufende Einschnitte durchtrennt, die verhindern sollen, daß ein Arbeiten der Sperrlage quer zu ihrer Faserrichtung zum Aufwölben des Paneelbretts führt.

Bei der Herstellung solcher Paneelbretter wird zunächst etwa mittels einer beheizbaren Presse aus Tritt- und Sperrlage eine Platte hergestellt, in welche dann von der von der Trittlage abgewandten Oberfläche her zueinander parallele Nuten eingesägt werden, welche einerseits die Sperrlage ganz durchsetzen müssen, andererseits aber möglichst nicht in die Trittlage eindringen sollen.

Diese Bearbeitung erfordert ein hohes Maß an Genauigkeit und ist daher aufwendig.

Diese Bearbeitung erfolgt durch eine Vielblatt-Kreissäge, bei welcher auf einer rotierenden Werkzeugwelle mehrere Kreissägeblätter nebeneinanderliegend angebracht sind.

Da die Arbeitsbreite einer solchen Vielblatt-Kreissäge beschränkt ist, kann die hiermit bearbeitete Platte ebenfalls nur diese beschränkte Breite aufweisen.

Die so bearbeitete Platte wird dann zu einzelnen Paneelbrettern zersägt, die gegebenenfalls noch einer Nachbearbeitung unterzogen werden, etwa dem Überschleifen der Trittfläche, dem Einfräsen von Nuten und Federn in die Seitenkanten und dergleichen.

Die Sägeschnitte werden in der Faserrichtung der Trittlage vorgenommen, also quer zu den genannten Einschnitten, so daß die Länge der auf diese Weise hergestellten Paneelbretter höchstenfalls mit der Arbeitsbreite der genannten Vielblatt-Kreissäge übereinstimmt.

Die Herstellung längerer Paneelbretter ist aber auch aus einem anderen Grund nicht möglich:

Beim Verleimen werden die einzelnen Holzbestandteile der Feuchtigkeit des Leimes und gegebenenfalls auch der Wärme ausgesetzt, so daß sich die durch Verleimen hergestellte Platte verziehen kann, bevor der Leim voll ausgehärtet ist. Infolge der Feuchtigkeit des Leimes tritt in der Regel auch noch nach der Aushärtung des Leimes ein nachträglicher Verzug ein.

Der Verzug kann praktisch nur noch durch spanende Nachbearbeitung ausgeglichen werden; da nun das Ausmaß des Verzuges mit der Abmessung des Paneelbrettes zunimmt, andererseits aber nur eine dünne Schicht der Trittfläche durch Nachbearbeitung abgetragen werden darf, ist auch aus diesem Grund die Länge des Paneelbrettes sehr begrenzt.

Ferner ist ersichtlich, daß der eintretende Verzug das präzise Einfräsen der Nuten in die Sperrlage erschwert.

Das nach diesem bekannten Verfahren hergestellte Paneelbrett hat den Vorteil, verhältnismäßig dünn zu sein, so daß es beim Verlegen auf einem gegossenen Estrich sich an etwa vorhandene, geringfügige Unebenheiten anschmiegt und diese nicht, wie ein dickeres Paneelbrett, freitragend überspannt, so daß das bekannte Paneelbrett bei örtlicher Belastung nicht nachgibt.

Um die aufwendige Herstellung mehrlagiger Paneelbretter zu vereinfachen, ist auch das im Oberbegriff des Anspruchs 4 beschriebene Verfahren bekannt, bei welchem wie beim obengenannten, bekannten Verfahren die Trittlage mit einer Sperrlage aus Holzbrettern oder -stäben verleimt wird, deren Faserverlauf sich quer zu jenem der Trittlage erstreckt.

Auf die von der Trittlage abgewandte Oberfläche der Sperrlage wird nun eine weitere Lage aufgeleimt, deren Faserverlauf mit jenem der Trittlage übereinstimmt und die zur Aufnahme von Zugspannungen dienen soll, wodurch dem oben beschriebenen "Schüsseln" sowie dem oben beschriebenen, beim Verleimen auftretenden Verzug entgegengewirkt werden soll.

Um aber aus den oben genannten Gründen zu verhindern, daß das Paneelbrett zu dick wird, wird in der Praxis als weitere Lage ein Schälfurnier verwendet, dessen Querschnitt viel zu klein ist, um tatsächlich so hohe Kräfte aufzunehmen, wie sie erforderlich sind, um dem Verzug wirksam entgegenzuwirken.

Es ist daher auch bei diesem, bekannten Paneelbrett dann, wenn beim Verleimen ein Verzug eingetreten ist, eine aufwendige, spanende Nachbearbeitung erforderlich.

Ausgehend von diesem Stand der Technik liegt der Erfindung die Aufgabe zugrunde, die beiden

bekannten Verfahren zur Herstellung von Paneelbrettern dahingehend weiterzubilden, daß das jeweilige Herstellungsverfahren für Paneelbretter der beschriebenen Art vereinfacht wird, so daß mit geringerem Aufwand, als er bisher erforderlich war, verzugsfreie, gegebenenfalls nachbearbeitete Paneelbretter hergestellt werden können.

Ferner soll das erstgenannte Verfahren so weitergebildet werden, daß Paneelbretter von bis zu einigen Metern Länge hergestellt werden können.

Diese Aufgabe wird durch die kennzeichnenden Merkmale der Ansprüche 1 und 4 gelöst, wobei diesen der folgende, gemeinsame Lösungsgedanke zugrundeliegt:

Bei den bekannten Verfahren wird aus den Brettern bzw. Stäben der Trittlage, der Sperrlage und gegebenenfalls der weiteren Lage durch Verleimen eine Platte gebildet. Erfindungsgemäß wird nun nicht eine einzige Platte verleimt, sondern eine Doppelanordnung der einzelnen Lagen, wobei auf die von der Trittfläche abgewandte Oberfläche einer Platte die von der Trittfläche abgewandte Oberfläche einer zweiten, nach Material, Abmessung und Faserverlauf gleichartigen Platte aufgebracht wird, wodurch eine Verbundplatte entsteht, die an ihren beiden Oberflächen jeweils eine Trittfläche aufweist, zu denen parallel und mittig eine Symmetrieebene verläuft.

Die beiden an die Symmetrieebene angrenzenden Lagen stimmen in Faserrichtung und Material überein und können daher auch von einer einzigen Lage gebildet sein, deren Dicke jener der beiden genannten Lagen entspricht.

Diese Verbundplatte wird nach dem Verleimen in Doppelbrettrohlinge zersägt, deren Oberfläche jeweils etwa jener der herzustellenden Paneelbretter entspricht, gegebenenfalls zuzüglich einer Bearbeitungszugabe.

Da die Anordnung im Querschnitt völlig symmetrisch aufgebaut ist, tritt beiderseits der Symmetrieebene jeweils ein nach Richtung und Größe gleichartiger Verzug auf, so daß sich der Verzug beider Hälften dieser Verbundplatte voll kompensiert. Die entstandene Verbundplatte ist ebenso wie die von ihr abgeschnittenen Doppelbrettroh linge völlig verzugsfrei.

Nach Abkühlen des Verbundes, Aushärten des Leimes und weitgehender Trocknung der vom Leim angefeuchteten Holzteile werden nun die Doppelbrettrohlinge längs der oben beschriebenen Symmetrieebene halbiert, wobei bei der Bemessung jener Lage, die in der Symmetrieebene liegt, bzw. jener Lagen, die an die Symmetrieebene angrenzen, jeweils die Schnittbreite des Halbierungsschnittes berücksichtigt werden muß.

Die so gewonnenen Paneelbretter benötigen, da sie verzugsfrei sind, keinerlei den Verzug ausgleichende Nachbearbeitung.

Es ist grundsätzlich möglich, etwa bei Verwendung eines Schmelzklebers zur Herstellung der Verbundplatte die Doppelbrettrohlinge sofort nach ihrer Entstehung zu halbieren, da zu diesem Zeitpunkt der Schmelzkleber bereits ausreichend abgekühlt und hiermit ausgehärtet ist.

Bei der Verwendung eines Leimes, der die von ihm kontaktierten Holzteile befeuchtet, ist dagegen dann mit einem Verzug der fertigen Paneelbretter zu rechnen, wenn die Halbierung bereits vorgenommen wird, bevor die Doppelbrettrohlinge trocken sind.

Gemäß einer bevorzugten Ausgestaltung der Erfindung ist es sogar von Vorteil, die Doppelbrettrohlinge zur völligen Austrocknung einige Tage bevorzugt in einer Trocknungskammer abzulagern, und zwar bevorzugt für etwa zwei Tage, um völlig sicher zu sein, daß nach dem Halbieren der Doppelbrettrohlinge sich nicht noch ein wenn auch nur geringer Verzug einstellt.

Die durch das erfindungsgemäße Verfahren gewonnenen Paneelbretter können abschließend an ihren Längskanten bearbeitet und mit einer Nut- und Federanordnung versehen werden.

Gemäß einer bevorzugten Ausgestaltung der Erfindung erfolgt diese Bearbeitung jedoch bereits bei den noch nicht halbierten Doppelbrettrohlingen, da bei diesen die zwei noch in der Symmetrieebene miteinander verbundenen Paneelbretter in einem einzigen Arbeitsgang mit ihren erforderlichen Nuten und Federn versehen werden können, wodurch eine noch weitere Vereinfachung des Herstellungsverfahrens erzielt wird.

Gemäß Anspruch 1 wird zur Herstellung von Paneelbrettern, deren Sperrlage von Nuten durchtrennt ist, das oben beschriebene, erfindungsgemäße Grundverfahren auf die folgende Weise modifiziert:

Zunächst wird eine Zwischenlage dadurch geschaffen, daß Bretter oder Stäbe aus Holz an ihren Längskanten miteinander verleimt werden. Die Dicke dieser Zwischenlage beträgt das Doppelte der am Paneelbrett vorgesehenen Sperrschicht zuzüglich der Breite jenes Halbierungsschnittes, der zum Halbieren der Doppelbrettrohlinge erforderlich ist.

In die so gewonnene und dimensionierte Zwischenlage werden nun von beiden Seiten her Einschnitte eingebracht, die nach Verlauf und Abstand den Nuten in der Unterseite der Sperrschicht des herzustellenden Paneelbrettes entsprechen, aber nur etwa bis zur Mitte der Dicke der Zwischenplatte reichen.

Auf diese vorgefräste Zwischenplatte wird nun beiderseits jeweils eine Trittlage aufgeleimt, wobei Faserverlauf, Material und Dimensionierung der beiden Trittlagen gleich ist.

Nach dem Verleimen, dem Aushärten des Leimes, der Trocknung der so gewonnenen Verbundplatte und dem Zerteilen in Doppelbrettrohlinge wird nun jeder Doppelbrettrohling auf die oben beschriebene Weise halbiert, wobei die Tiefe der Einschnitte in die Zwischenplatte so bemessen ist, daß die Einschnitte mindestens bis an den Halbierungsschnitt heranreichen, sich aber nicht oder nicht weit über diesen hinaus erstrecken.

Während beim bekannten Verfahren größte Genauigkeit beim Einbringen der Einschnitte angezeigt war, um einerseits sicherzustellen, daß die Sperrlage voll durchtrennt wird, andererseits aber zu verhindern, daß in die Trittlage eingeschnitten wird, ist beim erfindungsgemäßen Verfahren die genaue Tiefe der Einschnitte unwesentlich, vorausgesetzt, die Einschnitte reichen jeweils bis zum Halbierungsschnitt.

Es ist grundsätzlich möglich und zum Erzielen einer besonders symmetrisch aufgebauten Platte auch vorteilhaft, wenn man die Einschnitte in die beiden Oberflächen der Zwischenplatte genau einander gegenüberliegend einbringt. Hierbei muß jedoch wieder die Tiefe der Einschnitte mit verhältnismäßig hoher Genauigkeit ausgeführt werden, um sicherzustellen, daß nicht versehentlich die Zwischenplatte ganz durchschnitten wird oder beim Einlegen in die Leimpresse zerbricht.

Es ist daher gemäß einer bevorzugten Ausgestaltung der Erfindung von Vorteil, wenn die Einschnitte in die beiden Oberflächen der Zwischenplatte zueinander versetzt sind, wobei der Einschnitt in der einen Oberfläche bevorzugt mittig zwischen zwei Einschnitten der gegenüberliegenden Oberfläche angeordnet ist, um eine möglichst gleichmäßige Spannungsverteilung in der herzustellenden Verbundplatte zu erreichen.

Die Einschnitte werden bevorzugt mit einer Vielblatt-Kreissäge ausgeführt, deren Arbeitsbreite , wie bereits eingangs erwähnt, beschränkt ist. Erfindungsgemäß wird nun die Breite der Zwischenlage so bemessen, daß sie die genannte Arbeitsbreite nicht übertrifft. Mehrere dieser Zwischenlagen werden nach der Vornahme der Einschnitte jedoch an ihren Längskanten stumpf miteinander verleimt, so daß nach dem Aufleimen der beiden Trittlagen auf die Oberflächen der so gewonnenen Anordnung eine Verbundplatte gebildet wird, deren Länge in Richtung des Faserverlaufes der Trittlagen 3,5 m bis 6 m, bevorzugt 4 m bis 5 m beträgt, so daß es durch das erfindungsgemäße Verfahren möglich wird, Paneelbretter entsprechender Länge herzustellen.

Beim Einbringen der Einschnitte in die Zwischenlage können bevorzugt im gleichen Arbeitsgang auch noch weitere Einfräsungen vorgenommen werden, soweit dies erforderlich ist.

Zur Weiterbildung des zweiten, eingangs genannten Verfahrens zur Herstellung dreilagiger Paneelbretter werden gemäß Anspruch 4 zunächst die Elemente der einen Trittlage, dann jene der zugehörigen Sperrlage, dann jene einer Zwischenlage, wiederum jene der zweiten Sperrlage und auf diese jene der zweiten Trittlage aufgebracht und miteinander verleimt. Hierbei stehen die Richtungen des Faserverlaufs in jeweils benachbarten Lagen senkrecht aufeinander, ausgenommen jener Fall, in welchem die Zwischenlage von zwei jeweils an die Symmetrieebene angrenzenden Einzellagen gebildet wird; deren Faserverlauf ist gleich.

Die zwischen den beiden Sperrlagen liegende Mittellage weist eine Dicke auf, die dem zweifachen jener der unteren Lage des herzustellenden Paneelbretts sowie der Breite des Halbierungsschnitts entspricht.

Die mittlere Lage kann aber, wie oben beschrieben, auch aus zwei miteinander verleimten Einzellagen bestehen.

Während bei dem durch das bekannte Verfahren hergestellten Paneelbrett die unterste Lage in der Regel durch ein Schälfurnier gebildet wird, ist bei dem durch das erfindungsgemäße Verfahren hergestellten Paneelbrett die untere Lage ein wenig dicker und außerdem durch den in diese eingedrungenen und in unverzogenem Zustand ausgehärteten Leim zusätzlich gefestigt. Es ist somit ein noch immer recht dünnes, aber verzugsfreies Paneelbrett gebildet, bei welchem die untere Lage imstande ist, später im Gebrauch wirksam dem Verzug entgegenzuwirken.

Wo es auf die Dicke des Paneelbrettes nicht ankommt, ist es möglich, die mittlere Lage auch durch eine Anzahl mehrerer Lagen zu ersetzen; wesentlich ist in jedem Fall die nach Faserverlauf, Material und Dimensionierung symmetrische Anordnung in Bezug auf die oben genannte Symmetrieebene. Dichere Paneelbretter, die sich bei üblicher Belastung nicht durchbiegen, werden bevorzugt auf Polsterhölzer verlegt.

Insgesamt ermöglicht die Erfindung somit die Herstellung verzugsfreier und verhältnismäßig dünner Sperrholz-Paneelbretter, wie sie bevorzugt als Fußbodenbelag Verwendung finden können.

Solche Fußboden-Paneelbretter sind nicht nur für Neubauten, sondern ganz besonders für die Altbausanierung anwendbar, denn dort müssen doe Paneele wegen der bereits vorgegebenen Stockwerkhöhen möglichst dünn sein; außerdem ist bei der Altbausanierung öfter mit Feuchtigkeitseinflüssen zu rechnen, wo es auf verzugsfreie Paneelbretter besonders ankommt.

Ein weiteres, bevorzugtes Anwendungsgebiet für die durch die erfindungsgemäßen Verfahren hergestellten Paneelbretter ist die Abdeckung von Fußbodenheizungen: wegen der von einer solchen Heizung beanspruchten Bauhöhe kommt es besonders auf ein dünnes Paneel an; ferner hat dieses dünne Paneel eine verhältnismäßig geringe Wärme dämmwirkung, so daß das Ansprechverhalten der Fußbodenheizung nicht wesentlich beeinträchtigt wird und besonders der Wärmestau vermieden wird.

Die durch das erfindungsgemäße Verfahren hergestellten Paneele können nicht nur als Fußbodenpaneele, sondern auch als Wand- und Deckenpaneele sowie Als Paneele zum Auskleiden von Wasser- und Landfahrzeugen verwendet werden, und zwar besonders dort, wo sie wechselnden Temperaturen und der Feuchtigkeit ausgesetzt sind.

Das erfindungsgemäße Verfahren ermöglicht den Einsatz und die volle Ausnutzung der größten Leimpressen, wobei die hergestellten Verbundplatten eine Länge und Breite von mehreren Metern aufweisen können.

Der Gegenstand der Erfindung wird anhand der beigefügten, schematischen Zeichnung beispielsweise noch näher erläutert.

Hierbei zeigen:

die Fig. 1a bis 1f die einzelnen Verfahrensschritte eines Verfahrens gemäß einer ersten Ausführungsform der Erfindung, und

die Fig. 2a bis 2d die Verfahrensschritte einer weiteren Ausführungsform des erfindungsgemäßen Verfahrens.

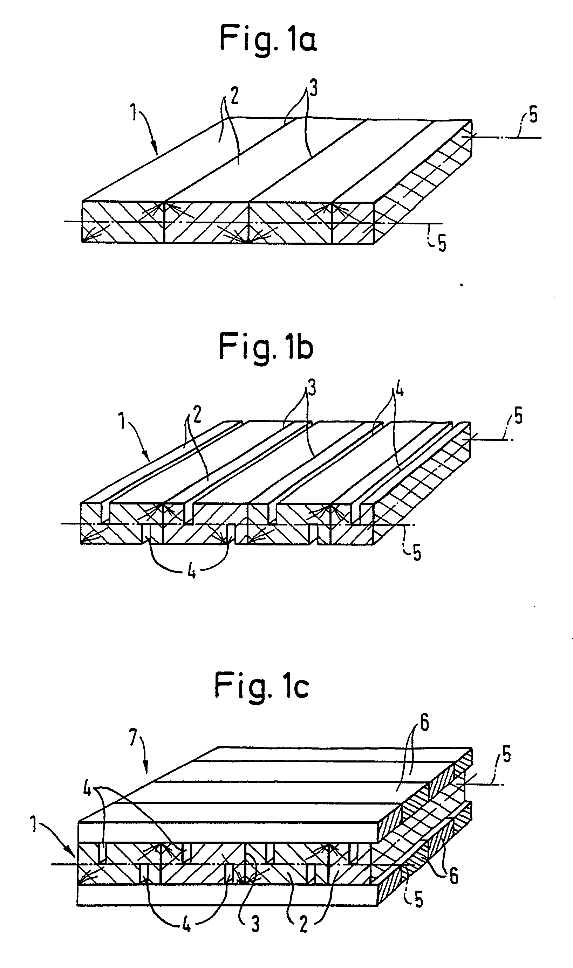

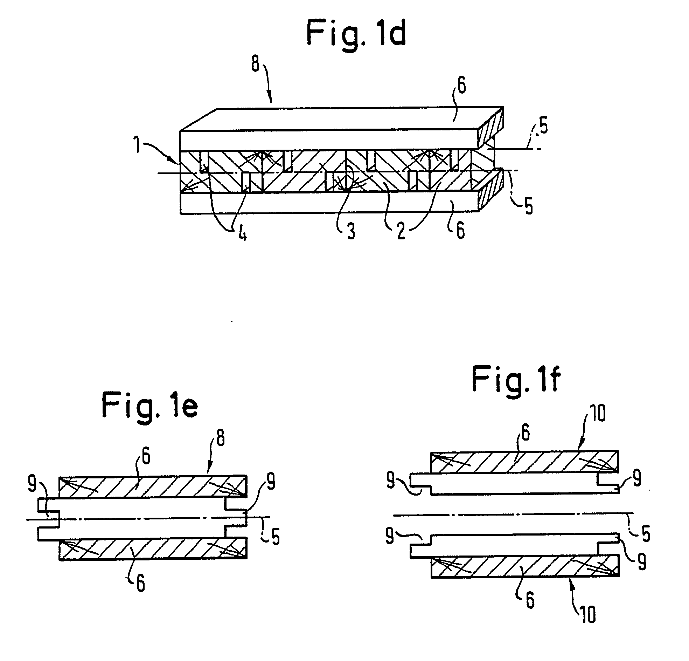

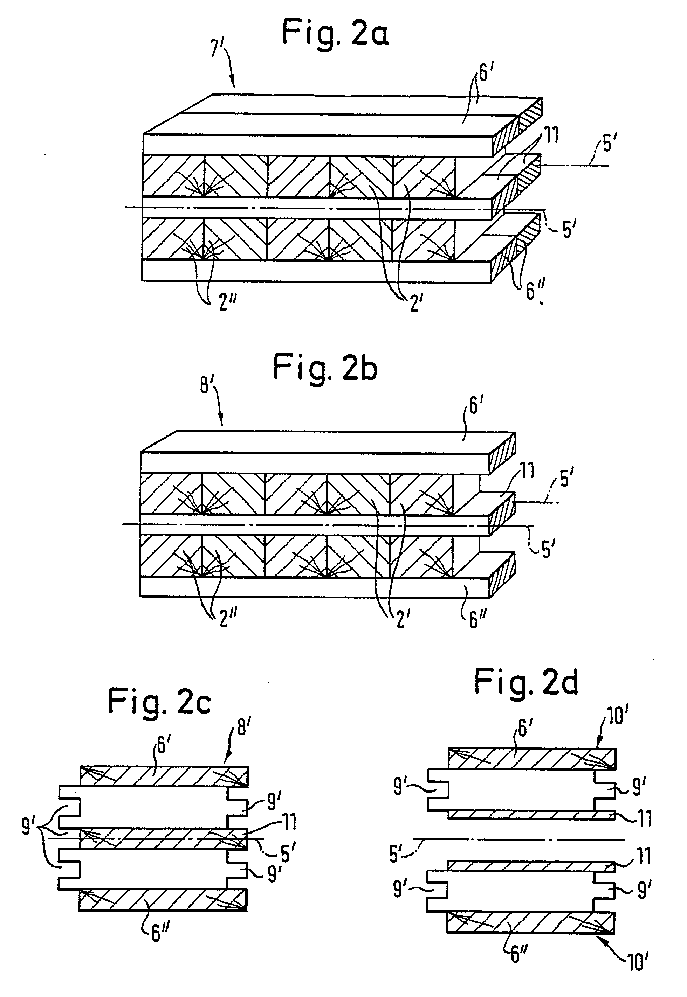

Die Fig. 1a bis 1d sowie 2a und 2b sind jeweils Darstellungen einer Zwischenplatte (Fig. 1a und 1b), einer Verbundplatte (Fig. 1c und 2a) bzw. eines Doppelbrettrohlings (Fig. 1d und 2b) im Schrägbild und jeweils abgebrochen, während die übrigen Figuren Endansichten eines Doppelbrettrohlings (Fig. 1e und 2c) bzw. eines Paneelbretts (Fig. 1f und 2d) sind.

In Fig. 1a ist eine Zwischenplatte 1 gezeigt, die durch gegenseitiges Aneinanderleimen von Holzbrettern oder -stäben 2 an deren Längs-Schmalseiten gebildet ist; die Leimstellen sind mit 3 bezeichnet.

Mit 5 ist die Mittelebene der so gebildeten Zwischenplatte bezeichnet.

Wie in Fig. 1b gezeigt, werden von beiden Oberflächen ausgehend Einschnitte 4 in die Zwischenplatte eingefräst, die sich parallel zum Längsverlauf der Holzbretter bzw. -stäbe 2 sowie senkrecht zu den Oberflächen erstrecken.

Wie aus der Zeichnung ersichtlich, erstrecken sich die Einschnitte 4, von der jeweiligen Oberfläche der Zwischenplatte 1 ausgehend, bis zur Mittelebene 5 und ein wenig über diese hinaus.

Ferner ist aus der Zeichnung ersichtlich, daß die Nuten 4 der Ober-und Unterseite der Zwischenplatte zueinander jeweils um eine halbe Teilung (Abstand zwischen benachbarten Nuten einer Oberfläche) versetzt sind.

Die Einschnitte 4 werden mittels einer Vielblatt-Kreissäge in die Zwischenplatte eingebracht, die man mit jeder Seite einmal unter dieser Säge hindurchlaufen läßt.

Eine solche Zwischenplatte hat nur eine begrenzte Breite; falls erforderlich, werden daher mehrere solcher Zwischenplatten mit ihren Längs-Seitenkanten aneinandergeleimt, um so die Zwischenlage einer Verbundplatte zu schaffen, die in Richtung quer zu den Einschnitten 4 mindestens die Länge der herzustellenden Paneelbretter aufweist.

Mit der Ober- und Unterseite der Zwischenplatte 1 bzw. der aus mehreren Zwischenplatten gebildeten Zwischenlage werden dann, wie aus Fig. 1c ersichtlich, jeweils aneinander angrenzende Bretter 6 verleimt, die jeweils eine obere und untere Trittlage bilden und deren Fasern sich quer zu jenen der Zwischenplatte bzw. Zwischenplatten 1 erstrecken.

Nach der Verleimung ergibt sich somit eine dreilagige Verbundplatte 7, die an ihrer Ober- und Unterseite eine Trittlage 6 aufweist.

Diese Verbundplatte wird dann in Doppelbrettrohlinge zerschnitten, wobei sich jede Schnittlinie senkrecht zu den Oberflächen und parallel zum Faserverlauf in den Trittlagen 6 erstreckt (Fig. 1d).

Die so gewonnenen Doppelbrettrohlinge 8 werden, wie in Fig. 1e gezeigt, an den Längskanten mit einer Nut-Feder-Anordnung 9 versehen; zusätzlich kann die jeweils freie Oberfläche der Trittlagen 6 (Trittfläche) geschliffen werden. Es ist gegebenenfalls auch vorteilhaft, die beiden Trittflächen des Doppelbrettrohlings zu lasieren, zu beizen und/oder einzulassen, wobei der Feuchtigkeitseintrag in das Holz infolge dieser Behandlung symmetrisch erfolgt und somit zu keinerlei Verzug führt.

Abschließend werden, wie in Fig. 1f gezeigt, die fertig zugerichteten, ausgehärteten und getrockneten Doppelbrettrohlinge längs der Mittelebene 5 durch einen Schnitt halbiert, wodurch zwei mehrlagige Paneelbretter 10 gebildet werden.

Die in Fig. 1a gezeigte Zwischenlage 1 weist bevorzugt eine Dicke von 20 mm, eine Länge von 5m und eine Breite von 1,5 m auf. Die Dicke der Trittlage 6 (Fig. 1c) beträgt 7,8 mm. Die Breite des Halbierungsschnittes beträgt etwa 3,5 bis 4 mm. Ein Paneelbrett dieser Art ist besonders zum Verlegen auf nicht völlig ebenem Estrich und über Fußbodenheizungen geeignet.

In Fig. 2a ist eine Verbundplatte 7′ gezeigt, die aus fünf überein anderliegenden Lagen gebildet ist, und zwar einer in der Abbildung untenliegenden Trittlage 6″, einer darüberliegenden Sperrlage 2″, einer darüberliegenden Mittellage 11′, einer wiederum darüberliegenden Sperrlage 2′ und einer obenliegenden Trittlage 6′.

Die Abmessungen, das Material und der Faserverlauf in der unteren und oberen Trittlage 6′ sind jeweils gleich; das gleiche gilt für die beiden Sperrlagen 2′, 2″.

Außerdem ist der Faserverlauf jeweils zweier benachbarter Lagen jeweils zueinander senkrecht.

Die aus einzelnen Holzbrettern oder -stäben 2', 2", 6', 6" und 11 gebildete Verbundplatte wird in der in Fig. 2a gezeigten Form verleimt und anschließend in Doppelbrettrohlinge 8' zerschnitten; einer dieser Doppelbrettrohlinge 8' ist in Fig. 2b gezeigt.

Der Schnitt erfolgt hierbei jeweils senkrecht zu den Oberflächen und parallel zum Faserverlauf der beiden Trittlagen 6' und 6".

Anschließend werden Nut- und Federanordnungen 9' in die beiden Längskanten des Abschnitts 8' eingefräst (Fig. 2c); nachfolgend wird nach dem Aushärten des Leimes sowie dem Abkühlen und Trocknen der Verbundplatte der Doppelbrettrohling 8' längs seiner Mittelebene 5', wie in Fig. 2d gezeigt, in zwei Paneelbretter 10' durch einen Halbierungsschnitt aufgetrennt.

Die in Fig. 2a gezeigte Verbundplatte weist fünf Lagen mit jeweils einer Dicke von 7,8 mm auf; die Breite des Halbierungsschnittes beträgt 2,8 mm, so daß der in Fig. 2d gezeigte Unterzug eine Dicke von 2,5 mm aufweist. Ein Paneelbrett der in Fig. 2d gezeigten Art ist besonders zum Verlegen auf Polsterhölzern geeignet.

Die einander bezüglich der Symmetrieebene der jeweiligen Verbund platte bzw. des jeweiligen Doppenbrettrohlings gegenüberliegenden, einander entsprechenden Lagen weisen jeweils die gleiche Faserrichtung sowie eine solche Dicke und ein solches Material auf, daß der durch jede dieser beiden Lagen herbeigeführte Verzug genau gleich ist und somit durch jenen der anderen Platte kompensiert wird; obwohl nicht in jedem Fall erforderlich, sind bevorzugt die einander symmetrisch entsprechenden Lagen jeweils aus dem gleichen Material gebildet und weisen jeweils die gleichen Abmessungen und den gleichen Aufbau auf.

Die Erfindung betrifft neben dem Verfahren ausdrücklich auch nach dem erfindungsgemäßen Verfahren hergestellte Verbundplatten, Doppelbrettrohlinge und Paneelbretter.

## Ansprüche

1. Verfahren zur Herstellung von mehrlagigen Paneelbrettern bevorzugt für Fußböden, durch Verleimen einer eine Sicht- oder Trittfläche bildenden Trittlage aus mehreren nebeneinanderliegenden Holzbrettern, deren Fasern jeweils längsverlaufen, mit einer Sperrlage aus nebeneinanderliegenden Holzbrettern oder -stäben, deren Fasern parallel zur Trittfläche und senkrecht zu jenen der Trittlage angeordnet sind, wobei die Sperrlage mehrfach parallel zu ihrem Faserverlauf sowie senkrecht zur Trittfläche durchschnitten wird, die so gewonnene Platte parallel zum Faserverlauf in der Trittlage zu Paneelbrettern zersägt wird und deren Längskanten gegebenenfalls etwa durch Überfräsen fertig bearbeitet werden,
dadurch **gekennzeichnet,** daß
- durch Verleimen von Holzbrettern oder -stäben, deren Dicke mindestens das Doppelte jener der Sperrschicht beträgt, eine Zwischenplatte gebildet wird,
- in die beiden Oberflächen der Zwischenplatte jeweils eine Anzahl von Einschnitten senkrecht zu den Oberflächen und parallel zum Faserverlauf eingebracht werden, die mindestens bis kurz vor die Mittelebene der Zwischenplatte reichen,
- auf jede der beiden Oberflächen der Zwischenplatte jeweils eine Trittlage geleimt wird,
- die so gewonnene Verbundplatte in Doppelbrettrohlinge zersägt wird, deren Größe in der jeweiligen Trittfläche etwa jener der herzustellenden Paneelbretter entspricht, und
- die Doppelbrettrohlinge durch einen Trennschnitt längs der Mittelebene zwischen den beiden Trittflächen halbiert werden, der die Einschnitte schneidet oder tangiert.

2. Verfahren nach Anspruch 1, dadurch gekennzeichnet, daß die einander gegenüberliegenden Einschnitte auf den beiden Oberflächen der Zwischenplatte einander gegenüberliegend oder zueinander versetzt eingebracht werden.

3. Verfahren nach einem der Ansprüche 1 oder 2, dadurch gekennzeichnet, daß mehrere Einschnitte gleichzeitig mittels einer Vielblatt-Kreissäge in die deren Arbeitsbreite in der Breite nicht übersteigende Zwischenplatte eingebracht werden.

4. Verfahren nach Anspruch 3, dadurch gekennzeichnet, daß mehrere mit Einschnitten versehene Zwischenplatten an ihren Längskanten vor dem Aufleimen der Trittlagen miteinander verleimt werden.

5. Verfahren nach Anspruch 4, dadurch gekennzeichnet, daß soviele mit Einschnitten versehene Zwischenplatten miteinander verleimt werden, daß die gewonnene Verbundplatte in Faserrichtung der Trittlagen eine Länge von 3,5 m bis 6 m, bevorzugt von 4m bis 5 m erreicht.

6. Verfahren zum Herstellen von mehrlagigen Paneelbrettern bevorzugt für Fußböden, durch Verleimen einer eine Sicht- oder Trittfläche bildenden Trittlage aus mehreren nebeneinanderliegenden Holzbrettern mit jeweils längsverlaufenden Fasern mit einer Sperrlage aus nebeneinanderliegenden Holzbrettern oder -stäben, deren Fasern parallel zur Trittfläche und senkrecht zu jener in der Trittlage angeordnet sind, und durch Aufleimen einer weiteren Lage auf die von der Trittlage abgewandte Oberfläche der Sperrlage, wobei die weitere Lage ihrerseits mehrere Schichten aufweisen kann, die so gewonnene Platte parallel zum Faserverlauf in der Trittlage zu Paneelbrettern zersägt wird, und deren Längskanten gegebenenfalls etwa durch Überfräsen fertig bearbeitet werden,
dadurch **gekennzeichnet, daß**
- auf die weitere Lage eine zusätzliche, nach Material und Faserverlauf mit dieser übereinstimmende Lage oder statt der weiteren Lage eine solche mit mindestens doppelter Dicke auf die Sperrlage aufgeleimt wird,
- auf die freie Oberfläche dieser zusätzlichen bzw. weiteren Lage eine zweite, nach Material und Faserverlauf mit der ersten übereinstimmende Sperrlage aufgeleimt wird,
- auf diese eine zweite, nach Material und Faserverlauf mit der ersten übereinstimmende Trittlage aufgeleimt wird,
- die so gewonnene Verbundplatte in Doppelbrettrohlinge zersägt wird, deren Größe in der jeweiligen Trittfläche etwa jener der Paneelbretter entspricht, und
- die Doppelbrettrohlinge durch einen in der Mittelebene zwischen den beiden Trittflächen geführten Trennschnitt zur Bildung der Paneelbretter halbiert werden.

7. Verfahren nach einem der Ansprüche 1 bis 6, dadurch gekennzeichnet, daß die Fertigbearbeitung am jeweiligen Abschnitt vor dessen Halbierung vorgenommen wird.

8. Verfahren nach einem der Ansprüche 1 bis 7, dadurch gekennzeichnet, daß die Abschnitte nach ihrer Abkühlung und nach dem Aushärten des Leimes vor ihrer Halbierung bis zur mindestens nahezu vollständigen Trocknung abgelagert werden.

9. Verfahren nach Anspruch 8, dadurch gekennzeichnet, daß die Ablagerungszeit wenige Tagen, bevorzugt zwei Tage, beträgt und weiter bevorzugt in einem klimatisierten Trocknungsraum erfolgt.

10. Holz-Verbundplatte und/oder Doppelbrettrohling für die Herstellung von Paneelbrettern bevorzug für Fußböden, Wand- und Deckenverkleidungen mit einer Trittlage aus mehreren nebeneinander liegenden Holzbrettern, deren Fasern jeweils längs verlaufen, und mit mindestens einer Sperrlage aus nebeneinanderliegenden Holzbrettern oder -stäben, dadurch **gekennzeichnet,** daß die Verbundplatte eine zweite Trittlage aufweist, die auf der der ersten Tritt lage abgewandten Seite der Verbundplatte vorgesehen ist, und die beiden Trittlagen und die Sperrlage(n) zu einer Mittelebene der Verbundplatte nach Faserverlauf, Abmessungen und Beschaffenheit symmetrisch angeordnet sind.

11. Holz-Verbundplatte nach Anspruch 10, dadurch **gekennzeichnet,** daß eine einzige Sperrlage vorgesehen ist, in deren beide Oberflächen, und zwar zu diesen und parallel zu ihrem Faserverlauf verlaufende Einschnitte (4) vorgesehen sind, die sich bis etwa zur Mittelebene der Verbundplatte erstrecken.

12. Doppelbrettrohling nach einem der Ansprüche 10 oder 11, dadurch **gekennzeichnet,** daß er an seinen Seitenkanten zu beiden Seiten der Mittelebene mindestens eine Nut oder Feder aufweist.

# Fig. 1a

# Fig. 1b

# Fig. 1c

Fig. 1d

Fig. 1e

Fig. 1f

Fig. 2a

Fig. 2b

Fig. 2c

Fig. 2d